## Europäisches Patentamt
## European Patent Office
## Office européen des brevets

(11) Numéro de publication: **0 010 011**
**B1**

(12) **FASCICULE DE BREVET EUROPEEN**

(45) Date de publication du fascicule du brevet: **30.12.81**

(51) Int. Cl.³: **F 04 D 29/12, F 16 J 15/34**

(21) Numéro de dépôt: **79400598.3**

(22) Date de dépôt: **30.08.79**

(54) Pompes centrifuges, garniture d'étanchéité et unité pré-assemblée pour ces pompes.

(30) Priorité: **25.09.78 FR 7827389**

(43) Date de publication de la demande:
**16.04.80 Bulletin 80/8**

(45) Mention de la délivrance du brevet:
**30.12.81 Bulletin 81/52**

(84) Etats contractants désignés:
**BE CH DE GB IT LU NL SE**

(56) Documents cités:
**BE - A - 510 831**
**DE - A - 2 729 928**
**DE - B - 1 251 659**
**FR - A - 2 182 272**
**US - A - 3 504 917**
**US - A - 3 614 272**

(73) Titulaire: **SOCIETE INTERNATIONALE DE MECANIQUE INDUSTRIELLE S.A.**
**37 rue Notre-Dame**
**Luxembourg (LU)**

(72) Inventeur: **Menager, Jean**
**1, rue Glesener**
**Luxembourg (LU)**

(74) Mandataire: **Hagel, Francis et al,**
**Cabinet Robert Bloch 39, avenue de Friedland**
**F-75008 Paris (FR)**

Courier Press, Leamington Spa, England.

Pompes centrifuges, garniture d'étanchéité et unité pré-assemblée pour ces pompes

La présente invention concerne une pompe centrifuge, en particulier une pompe destinée à assurer la circulation du liquide de refroidissement dans les véhicules automobiles.

On connaît par le brevet FR - A - 2 357 760 une pompe comprenant un corps, un arbre monté rotatif dans le corps par l'intermédiaire d'un roulement, une turbine fixée sur l'arbre et, entre la turbine et le roulement, une garniture d'étanchéité à bagues frottantes comprenant un manchon intérieur en matière élastomère emmanché sur l'arbre, une contre-bague serrée sur une portion d'extrémité du manchon, une bague de frottement en contact avec la contre-bague, une membrane souple dont une extrémité supporte la bague de frottement et dont l'autre extrémité est fixée à un boîtier, un ressort exerçant une poussée sur la bague en direction de la contre-bague, ledit manchon comportant une portion adjacente à la turbine sur laquelle est fixée l'une des bagues et, à l'extrémité côté roulement, un épanouissement radial pour maintenir la garniture d'étanchéité à l'état assemblé avant son montage.

Dans les pompes de ce type, il est important d'empêcher la graisse contenue dans le roulement de s'écouler le long de l'arbre et de pénétrer dans la garniture d'étanchéité et on a l'habitude de monter, à l'extrémité du roulement, un joint à lèvre qui frotte sur l'arbre, ce joint pouvant prendre la forme d'une rondelle métallique munie à l'intérieur d'un surmoulage en caoutchouc en contact avec l'arbre. Mais l'étanchéité procurée par un tel joint n'est pas très efficace et il se produit fréquemment des infiltrations dans l'interface entre les bagues frottantes qui provoquent des fuites et aussi des couinements stridents, dus à l'augmentation du couple de frottement qui résulte de la pénétration d'une phase huileuse dans l'interface.

L'invention vise une pompe du type décrit plus haut, dans laquelle l'étanchéité vis-à-vis de la graisse du roulement est assurée de façon beaucoup plus efficace.

L'invention a pour objet une pompe du type décrit plus haut, qui est caractérisée par le fait que le manchon se prolonge axialement, au-delà dudit épanouissement radial, par une lèvre qui frotte sur la paroi adjacente du roulement.

Elle a également pour objet une garniture d'étanchéité pour pompe du type ci-dessus selon l'invention dans laquelle le manchon, en matière élastomère, se prolonge axialement au-delà d'un épanouissement radial d'extrémité par une lèvre circulaire destinée, après montage, à venir frotter sur la paroi adjacente du roulement par l'intermédiaire duquel l'arbre de la pompe est monté rotatif dans le corps de pompe.

L'invention a encore pour objet une unité pré-assemblée pour pompe centrifuge, comprenant un arbre, un roulement à billes monté sur l'arbre, la cage extérieure du roulement comportant un prolongement, et une garniture d'étanchéité du type ci-dessus montée dans ledit prolongement, la membrane de ladite garniture comportant une portion périphérique surmoulée sur la partie tubulaire du boîtier et munie d'une bourrelet radial.

L'invention sera bien comprise à la lecture de la description suivante, faite en se référant au dessin annexé dans lequel:

— la figure 1 représente en coupe axiale une pompe à eau d'automobile selon l'invention, dans un premier exemple de réalisation;

— la figure 2 montre la garniture d'étanchéité faisant partie de la pompe de la figure 1, à l'état libre;

— les figures 3 à 5 sont des vues de détail montrant des variantes de réalisation, et

— la figure 6 représente un autre exemple de réalisation de la pompe selon l'invention.

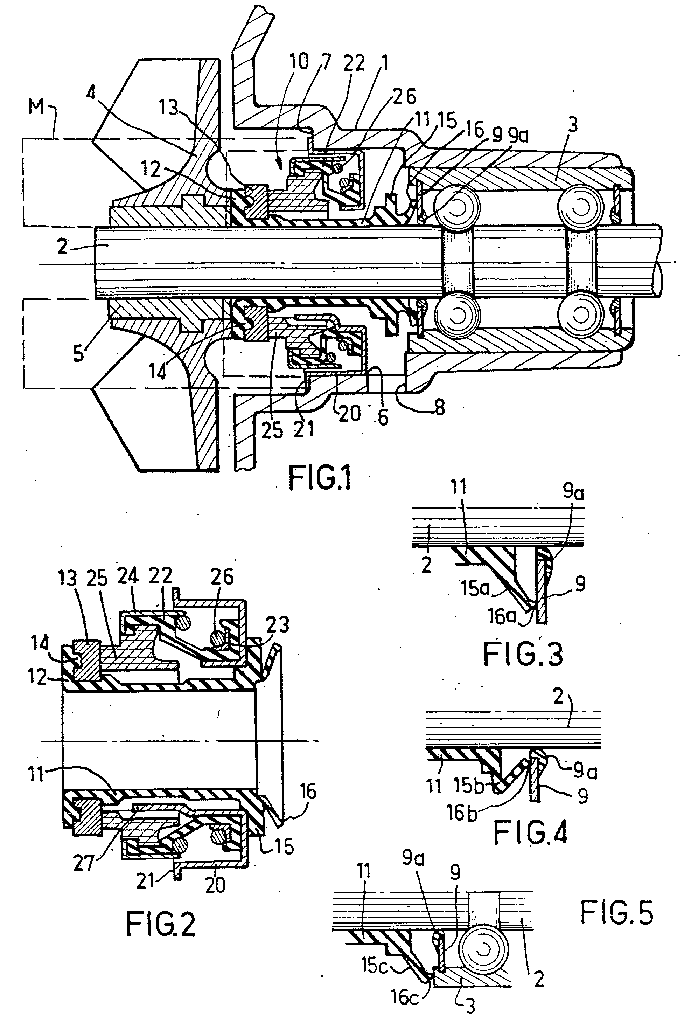

On a représenté à la figure 1 une pompe à eau de véhicule automobile qui comprend un corps 1, un arbre 2 monté rotatif dans le corps par l'intermédiaire d'un roulement à billes dont la cage extérieure est repérée en 3, une turbine 4 fixée sur l'arbre 2 par l'intermédiaire d'un moyeu 5 et, entre le roulement et la turbine, une garniture d'étanchéite à bagues frottantes désignée dans son ensemble par le repère 10 et réalisée sous la forme d'une unité pré-assemblée, comme le montre la figure 2.

La garniture d'étanchéité comprend un manchon intérieur 11 en matière élastomère qui assure le maintien à l'état assemblé de la garniture avant le montage dans la pompe. Le manchon 11 comprend une collerette radiale 12 en contact avec la face avant du moyeu de la turbine 5, et contre cette collerette est fixée une contre-bague 13 en matière de frottement qui presse le manchon 11 de façon à réaliser un ajustement avec serrage sur l'arbre 2 et qui est par conséquent solidaire en rotation de l'arbre 2. La collerette 12 comporte une protubérance 14 qui pénètre dans une cavité de forme correspondante de la contre-bague.

La partie fixe de la garniture comprend un boîtier métallique 20 emmanché à force dans la chambre 6 du corps de pompe 1 et en butée contre un épaulement 7 par son extrémité 21 dirigée radialement. Sur la partie intérieure du boîtier 20 est fixée l'une des extrémités d'une membrane élastique 22 au moyen d'un anneau métallique 23, et il est prévu en outre un collier métallique 24, de diamètre extérieur un peu inférieur au diamètre intérieur de la portion du boîtier 20, qui assure la liaison entre l'autre extrémité de la membrane 22 et une bague de frottement 25 en contact avec la contre-bague 13. Un ressort tronconique 26 est monté entre les deux extrémités de la membrane 22 et rappelle par conséquent la bague de frottement 25 en contact avec la contre-bague 13 de façon à assurer l'étanchéité lors du frottement de la contre-bague 13 sur la bague 25. En outre, la partie intérieure du boîtier 20 se prolonge par des languettes d'entraînement 27 qui coopèrent avec des évidements formés à l'intérieur de l'anneau de frottement 25.

Cet agencement de la garniture d'étanchéité est décrit plus en détail dans la FR - A - 2 394 729.

Le manchon 11 présente à son extrémité opposée à la collerette 12 un épanouissement radial 15 qui, comme le montre la figure 2, sert de butée pour maintenir la garniture à l'état assemblé avant montage. Une ouverture 8 est formée dans le corps de pompe au niveau de l'épanouissement 15, qui assure ainsi l'expulsion par centrifugation des gouttelettes d'eau ayant pu s'infiltrer à travers l'interface entre les bagues frottantes.

Le manchon 11 se prolonge au-delà de l'épanouissement 15 par une lèvre 16 qui frotte sur une rondelle métallique 9 montée à l'extrémité de la cage extérieure du roulement à billes 3, laquelle rondelle 9 porte sur son bord intérieur un surmoulage en caoutchouc 9a qui frotte sur l'arbre 2, l'ensemble de la rondelle 9 et du surmoulage 9a constituant de façon classique un joint à lèvre d'encombrement axial réduit.

Grâce au fait que la lèvre 16 formant l'extrémité du manchon 11 frotte sur la face extérieure de la rondelle 9, la graisse contenue dans le roulement 3 et ayant pu franchir le joint à lèvre 9, 9a est arrêtée par la lèvre 16 et ne peut s'écouler plus avant en direction de la garniture. Il faut d'ailleurs noter qu'on pourrait supprimer le surmoulage 9a, la lèvre 16 suffisant pour assurer l'étanchéité.

Le montage de la garniture 10 s'effectue à l'aide du mandrin M représenté en pointillés à la figure 1, qui comprend une partie périphérique qui sert à pousser sur le rebord 21 du boîtier 20 pour emmancher ce dernier jusqu'à la venue en butée avec l'epaulement 7 du corps de pompe, et une partie centrale qui sert à pousser sur la collerette 12 pour emmancher le manchon 11 sur l'arbre 2.

Les figures 3 à 5 montrent des variantes de réalisation de l'épanouissement 15 et de la lèvre 16. Dans la variante de la figure 3 qui présente un encombrement axial réduit, la lèvre 16a est formée par le prolongement de l'épanouissement 15a. La figure 4 montre une réalisation dans laquelle la lèvre 16b prolonge également l'épanouissement 15b, mais est retournée et frotte plus près de l'arbre, et qui s'applique contre la rondelle 9 avec une force qui augmente avec la vitesse de rotation de l'arbre 2 en vertu de la force centrifuge. Enfin, la figure 5 montre une variante un peu analogue à celle de la figure 3, mais dans laquelle la lèvre 16c frotte sur la face extérieure de la cage extérieure du roulement 3, et non sur la rondelle 9.

L'invention a été décrite dans le cas où la garniture 10 forme une unité pré-assemblée, mais elle est également applicable dans le cas où la garniture et la turbine avec son moyeu forment une unité pré-assemblée, comme décrit dans la FR - A - 2 357 760. Dans ce cas, la collerette 12 du manchon 11 est fixée au moyeu 5 de la turbine, et la turbine 4 présente des ouvertures axiales angulairement réparties pour permettre le montage de l'unité sur l'arbre du moteur, la partie tubulaire du mandrin M représenté à la figure 1 étant remplacée par des doigts qui traversent les ouvertures de la turbine. Abstraction faite de ces différences, ce qui a été dit plus haut reste valable.

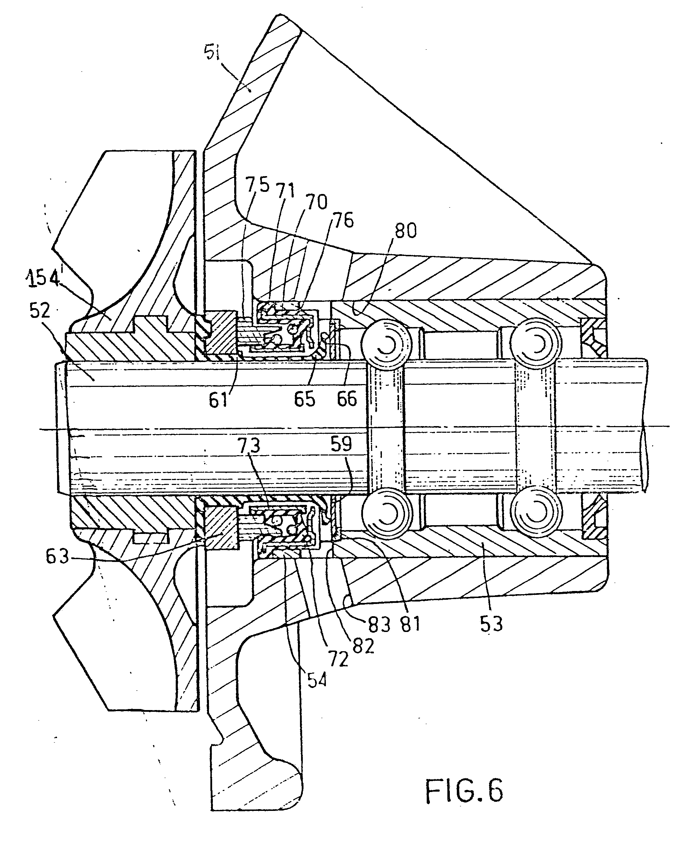

La réalisation représentée à la figure 6 diffère de celle de la figure 1 essentiellement par le fait que la partie fixe de la garniture d'étanchéité est montée dans un prolongement 54 de la cage extérieure 53 du roulement à billes.

La membrane élastomère 72 est dans ce cas surmoulée sur le boîtier métallique 70 et sa partie périphérique est donc en contact avec le prolongement 54. La membrane se termine par un bourrelet radial 71 en butée contre l'extrémité du prolongement 54 et en contact avec la paroi de l'alésage 80 du corps de pompe 51. Le bourrelet 71 assure l'étanchéité vis-à-vis de l'eau et protège ainsi contre la corrosion la cage extérieure 53.

L'extrémité interne de la membrane 72 est rendue solidaire de la bague de frottement 75 par un anneau métallique 73, et un ressort 76 est monté entre les extrémités de la membrane pour assurer le frottement d'étanchéité entre la bague 75 et la contre-bague 63. La contre-bague 63 est serrée sur l'arbre 52 par l'intermédiaire du manchon élastomère 61. Celui-ci comporte côté roulement un épanouissement radial 65 se terminant par une lèvre 66 qui frotte sur une rondelle 59 fixée à la cage extérieure de roulement 53 par l'intermédiaire d'un jonc 81.

Le prolongement 54 comporte des ouvertures 82 au niveau de l'épanouissement 65 et le corps de pompe présente également des ouvertures 83 situées dans le prolongement des ouvertures 82, de manière à mettre en communication l'espace compris entre la garniture et le roulement avec l'air extérieur et à permettre l'éjection des gouttelettes d'eau par l'épanouissement 65.

Pour le montage, la garniture complète est d'abord assemblée avec l'arbre muni de son roulement, la partie fixe de la garniture venant s'ajuster à l'intérieur du prolongement 54, cependant que le manchon 61 s'emmanche sur l'arbre 52.

Ensuite, on emanche la cage extérieure du roulement 53 dans l'alésage lissé 80 du corps de pompe avec la garniture en tête, le bourrelet 71 frottant sur l'alésage 80. Il ne reste plus alors qu'à monter la turbine 154 sur l'arbre 52.

Cette variante permet une réduction appréciable de la longueur axiale hors-tout de la pompe.

## Revendications

1. Pompe centrifuge, du type comprenant un corps, (1, 51) un arbre (2, 52) monté rotatif dans le corps (1, 51) par l'intermédiaire d'un roulement (3, 53), une turbine (4, 154) fixée sur l'arbre (2, 52) et, entre la turbine et le roulement, une garniture d'étanchéité (10) à bagues frottantes comprenant un manchon intérieur (11, 61) en matière élastomère emmanché sur l'arbre, une contre-bague (13, 63) serrée sur une portion d'extrémité du manchon adjacente à la turbine, une bague de frottement (25, 75) en contact avec la contre-bague (13, 63), une membrane souple (22, 72) dont une extrémité supporte la bague de frottement (25, 75) et dont l'autre extrémité est fixée à un boîtier (20, 70), un ressort (26, 76) exerçant une poussée sur la bague de frottement (25, 75) en direction de la contre-bague (13, 63) et à l'extrémité du manchon (11, 61), côté roulement, un épanouissement radial (15, 65) pour maintenir la garniture d'étanchéité à l'état assemblé avant son montage, caractérisée par le fait que le manchon (11, 61) se prolonge axialement, au-delà du dit épanouissement radial (15, 65), par une lèvre (16, 66) qui frotte sur la paroi adjacente du roulement.

2. Pompe selon la revendication 1, dans laquelle la lèvre (16) frotte sur une rondelle (9) solidaire de la cage extérieure (3) du roulement.

3. Pompe selon la revendication 1, dans laquelle la lèvre (16) frotte sur la paroi de la cage extérieure du roulement.

4. Pompe selon la revendication 1, dans laquelle la lèvre (16a) constitue le prolongement de l'épanouissement radial (15a).

5. Pompe selon la revendication 4, dans laquelle la lèvre (16b) est retournée vers l'intérieur.

6. Pompe selon la revendication 1, dans laquelle la cage extérieure de roulement (53) comprend un prolongement (54) dans lequel est ajustée la partie fixe de la garniture.

7. Pompe selon la revendication 6, dans laquelle la membrane (72) comporte une portion périphérique surmoulée sur un boîtier métallique (70) qui est ajustée dans le dit prolongement (54), la dite portion périphérique se terminant par un bourrelet radial (71) qui frotte sur la paroi intérieure (80) du corps de pompe (51).

8. Pompe selon la revendication 6, dans laquelle le dit prolongement (54) et le corps de pompe (51) comportent des ouvertures (82, 83) sensiblement en regard, situées au niveau de l'épanouissement radial (65) du manchon.

9. Garniture d'étanchéité pour pompe centrifuge, comprenant un manchon (11, 61) en matière élastomère, une contre-bague (13, 63) serrée sur une portion d'extrémité du manchon (11, 61), une bague de frottement (25, 75) en contact avec la contre-bague, une membrane souple (22, 72) dont une extrémité supporte la bague de frottement (25, 75) et dont l'autre extrémité est fixée à un boîtier (20, 70) comprenant une partie tubulaire, un ressort (26, 76) exerçant une poussée sur la bague de frottement (25, 75) en direction de la contre-bague (13, 63), le manchon (11, 61) comportant à son extrémité un épanouissement radial (15, 65) qui forme butée pour le boîtier (20, 70) de façon à maintenir la garniture à l'état assemblé, caractérisée par le fait que le manchon (11, 61) se prolonge axialement au-delà dudit épanouissement (15, 65) par une lèvre circulaire (16, 66) destinée, après montage, à venir frotter sur la paroi adjacente du roulement par l'intermédiaire duquel l'arbre de la pompe est monté rotatif dans le corps de pompe.

10. Garniture d'étanchéité selon la revendication 9, dans laquelle la membrane (72) comporte une portion périphérique surmoulée sur la partie tubulaire du boîtier (70) et munie d'un bourrelet radial (71).

11. Unité pré-assemblée pour pompe centrifuge, comprenant un arbre (52), un roulement à billes monté sur l'arbre, la cage extérieure du roulement (53) comportant un prolongement (54), et une garniture d'étanchéité selon la revendication 10 montée dans ledit prolongement.

## Claims

1. Centrifugal pump, of the type comprising a casing (1, 51), a shaft (2, 52) rotatively mounted in the casing (1, 51) via a bearing (3, 53), an impeller (4, 154) fixed on the shaft (2, 52) and, between the impeller and the bearing, a slide ring seal assembly (10) comprising an inner sleeve (11, 61) of elastomeric material fitted on the shaft, a counter-ring (13, 63) tightened on an end portion of the sleeve adjacent the impeller, a slide ring (25, 75) in contact with the counter-ring (13, 63), a flexible membrane (22, 72) of which one end supports the slide ring (25, 75) and of which the other end is secured to a housing (20, 70), a spring (26, 76) imparting a thrust on the slide ring (25, 75) in the direction of the counter-ring (13, 63) and, at the bearing side end of the sleeve (11, 61), a radial flare (15, 65) for holding the seal assembly in the assembled state prior to its mounting, characterized in that the sleeve (11, 61) is extended axially, beyond said radial flare (15, 65), by a lip (16, 66) which rubs on the adjacent wall of the bearing.

2. Pump according to Claim 1, wherein the lip (16) rubs on a washer (9) fast with the outer cage (3) of the bearing.

3. Pump according to Claim 1, wherein the lip (16) rubs on the wall of the outer cage of the bearing.

4. Pump according to Claim 1, wherein the lip (16a) is formed as an extension of the radial flare (15a).

5. Pump according to Claim 4, wherein the lip (16b) is turned inwardly.

6. Pump according to Claim 1, wherein the outer bearing cage (53) comprises an extension (54) in which is fitted the fixed part of the seal assembly.

7. Pump according to Claim 6, wherein the membrane (72) comprises a peripheral portion moulded on a metal housing (70) which is fitted in said extension (54), said peripheral portion terminating in a radial bead (71) which rubs on the inner wall (80) of the pump casing (51).

8. Pump according to Claim 6, wherein said extension (54) and the pump casing (51) comprise substantially opposite openings (82, 83) located at the level of the radial flare (65) of the sleeve.

9. Seal assembly for centrifugal pump, comprising a sleeve (11, 61) of elastomeric material, a counter-ring (13, 63) tightened on an end portion of the sleeve (11, 61), a slide ring (25, 75) in contact with the counter-ring, a flexible membrane (22, 72) of which one end supports the slide ring (25, 75) and of which the other end is fixed to a housing (20, 70) comprising a tubular part, a spring (26, 76) imparting a thrust on the slide ring (25, 75) in the direction of the counter-ring (13, 63), the sleeve (11, 61) comprising at its end a radial flare (15, 65) which acts as a stop for the housing (20, 70) so as to hold the seal assembly in the assembled state, characterized in that the sleeve (11, 61) is axially extended beyond said flare (15, 65) by a circular lip (16, 66), arranged, after assembling, for sliding on the adjacent wall of the bearing by means of which the shaft of the pump is rotatively mounted within the pump casing.

10. Seal assembly, according to Claim 9, wherein the membrane (72) comprises a peripheral portion moulded on the tubular part of the housing (70) and provided with a radial bead (71).

11. Self-contained unit for centrifugal pump, comprising a shaft (52), a ball bearing mounted on the shaft, the outer cage (53) of the bearing comprising an extension (54), and a seal assembly according to Claim 10 mounted in said extension.

**Patentansprüche**

1. Zentrifugenpumpe mit einem Gehäuse (1, 51), einer Welle (2, 52), die mittels eines Lagers (3, 53) drehbar in dem Gehäuse (1, 51) gelagert ist, mit einer Turbine (4, 154), die an der Welle (2, 52) befestigt ist, und mit einer Reibring-Dichtungsanordnung (10) zwischen der Turbine und dem Lager, die eine innere Manschette (11, 61) aus elastomeren Material enthält, die auf der Welle aufgeschrumpft ist, mit einem Gegenring (13, 63), der auf einem äusseren Teil der Manschette benachbart zur Turbine befestigt ist, mit einem Reibring (25, 75), der in Berührung mit dem Gegenring (13, 63) steht, mit einer biegsamen Membran (22, 72), deren eines äusseres Ende den Reibring (25, 75) trägt und deren anderes äusseres Ende an einem Gehäuse (20, 70) befestigt ist, mit einer Feder (26, 76) die einen Schub auf den Reibring (25, 75) in Richtung auf den Gegenring (13, 63) ausübt, und mit einem radialen Vorsprung (15, 65) am äusseren Ende der Manschette (11, 61) benachbart zu dem Lager, zum Halten der Dichtungsanordnung in zusammengesetztem Zustand vor seiner Montage, dadurch gekennzeichnet, dass sich die Manschette (11, 61) axial über den radialen Vorsprung (15, 65) hinaus erstreckt, und zwar mit einer Lippe (16, 66), die an der benachbarten Seitenwand des Lagers reibt.

2. Pumpe nach Anspruch 1, in der die Lippe (16) an einer Scheibe (9) reibt, die mit dem äusseren Gehäuse (3) des Lagers verbunden ist.

3. Pumpe nach Anspruch 1, in der die Lippe (16) an der Seitenwand des äusseren Gehäuses des Lagers reibt.

4. Pumpe nach Anspruch 1, in der die Lippe (16a) die Verlängerung des radialen Vorsprungs (15a) bildet.

5. Pumpe nach Anspruch 4, in der die Lippe (16a) nach innen hin umgebogen ist.

6. Pumpe nach Anspruch 1, in der das äussere Gehäuse des Lagers (53) eine Verlängerung (54) enthält, in der der feste Teil der Dichtungsanordnung ausgerichtet ist.

7. Pumpe nach Anspruch 6, in der die Membran (72) einen Umfangsteil enthält, der auf ein metallisches Gehäuse (70) eingeformt ist, das in der Verlängerung (54) ausgerichtet ist, wobei der Umfangsteil in einem radialen Wulst (71) endet, der an der Innenwand (80) des Pumpengehäuses (51) in Reibeingriff steht.

8. Pumpe nach Anspruch 6, in der die Verlängerung (54) und das Pumpengehäuse (51) im wesentlichen gegenüberliegende Öffnungen (81, 83) aufweisen, die auf dem Niveau des radialen Vorsprunges (65) der Manschette liegen.

9. Dichtungsanordnung für eine Zentrifugenpumpe mit einer Manschette (11, 61) aus elastomeren Material, einem Gegenring (13, 63), der auf einem äusseren Teil der Manschette (11, 61) befestigt ist, mit einem Reibring (25, 75) der mit dem Gegenring in Kontakt steht, mit einer biegsamen Membran (22, 72), deren eines äusseres Ende den Reibring (25, 75) trägt und deren anderes äusseres Ende an einem Gehäuse (20, 70) befestigt ist, das einen rohrförmigen Teil enthält, mit einer Feder (26, 76), die auf den Reibring (25, 75) einen Schub in Richtung auf den Gegenring (13, 63) ausübt, wobei die Manschette (11, 61) an ihrem äusseren Ende einen radialen Vorsprung (15, 65) aufweist, der einen Anschlag für das Gehäuse (20, 70) bildet, und zwar derart, dass die Dichtungsanordnung in zusammengesetztem Zustand gehalten wird, dadurch gekennzeichnet, dass sich die Manschette (11, 61) axial über den Vorsprung (15, 65) hinaus mit einer ringförmigen Lippe (16, 66) erstreckt, die dazu dient, nach der Montage, in Reibeingriff mit der benachbarten Seitenwand des Lagers zu kommen, mit dem die Pumpenwelle drehbar in dem Pumpengehäuse montiert ist.

10. Dichtungsanordnung nach Anspruch 9, in der die Membran (72) einen Umfangsteil aufweist, der auf dem rohrförmigen Teil des Gehäuses (70) eingeformt und mit einem radialen Wulst (71) versehen ist.

11. Vormontierte Einheit für eine Zentrifugenpumpe, mit einer Welle (52), einem Kugellager, das auf der Welle gelagert ist, wobei das äussere Gehäuse des Lagers (53) eine Verlängerung (54) enthält, und einer Dichtungsanordnung nach Anspruch 10 die in der Verlängerung ausgerichtet ist.

FIG.1

FIG.2

FIG.3

FIG.4

FIG.5

FIG.6